# EUROPEAN PATENT APPLICATION

(11) **EP 4 750 098 A1**
(43) Date of publication of application: **27.05.2026**
(21) Application number: 23945395.4
(22) Date of filing: 17.07.2023
(51) Int. Cl.: H04W 4/12

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: XING, Jinqiang, Dongguan, Guangdong 523860 (CN)
(74) Representative: Penza, Giancarlo
(86) International application number: PCT/CN2023/107752
(87) International publication number: WO 2025/015500

(57) **Abstract**

Provided are a wireless communication method, a terminal device, and a network device. The wireless communication method comprises: a first terminal device receives a first message sent by a network device, wherein the first message instructs a terminal device receiving the first message to assist the network device in forwarding the first message.

## Description

### TECHNICAL FIELD

The present disclosure relates to the technical field of communication, and more particularly, to a wireless communication method, a terminal device, and a network device.

### BACKGROUND

In a communication system, a terminal device may not be able to receive a message sent by a network device due to a reason such as being occluded. In some cases, if the terminal device misses the message, it may lead to serious consequences, for example, the message is an emergency call message, a public safety message, and the like sent by the network device. Therefore, how to enhance the message sent by the network device is an urgent problem to be solved.

### SUMMARY

The present disclosure provides a wireless communication method, a terminal device, and a network device. Various aspects of the present disclosure are described below.

A first aspect provides a wireless communication method, including operations as follows. A first terminal device receives a first message sent by a network device. The first message instructs terminal device(s) receiving the first message to assist the network device in forwarding the first message.

A second aspect provides a wireless communication method, including operations as follows. A second terminal device receives from a first terminal device a forwarding message of a first message sent by a network device. The first message instructs terminal device(s) receiving the first message to assist the network device in forwarding the first message.

A third aspect provides a wireless communication method, including operations as follows. A network device sends a first message. The first message instructs terminal device(s) receiving the first message to assist the network device in forwarding the first message.

A fourth aspect provides a terminal device, wherein the terminal device is a first terminal device, and the terminal device includes a first receiving module configured to receive a first message sent by a network device. The first message instructs terminal device(s) receiving the first message to assist the network device in forwarding the first message.

A fifth aspect provides a terminal device, wherein the terminal device is a second terminal device, and the terminal device includes a receiving module that is configured to receive, from a first terminal device, a forwarding message of a first message sent by a network device. The first message instructs terminal device(s) receiving the first message to assist the network device in forwarding the first message.

A sixth aspect provides a network device, including a sending module that is configured to send a first message. The first message instructs terminal device(s) receiving the first message to assist the network device in forwarding the first message.

A seventh aspect provides a terminal device including a communication interface, a processor and a memory for storing one or more computer programs. The processor is configured for invoking the computer program stored in the memory, to cause the terminal device to perform some or all of the steps in the method of any one of the first aspect to the second aspect.

An eighth aspect provides a network device including a communication interface, a processor and a memory for storing one or more computer programs, the processor is configured for invoking the computer program stored in the memory, to cause the network device to perform some or all of the steps in the method of the third aspect.

In a ninth aspect, an embodiment of the present disclosure provides a communication system including the terminal device and/or the network device described above. In another possible design, the system may further include other device(s) that interacts with the terminal device or the network device in the solution provided by the embodiment of the present disclosure.

In a tenth aspect, an embodiment of the present disclosure provides a computer-readable storage medium for storing a computer program that causes a computer to perform some or all of the steps in the methods of the above various aspects.

In an eleventh aspect, an embodiment of the present disclosure provides a computer program product including a non-transitory computer-readable storage medium for storing a computer program which, when being executed, causes a computer to perform some or all of the steps in the methods of the various aspects described above. In some implementation methods, the computer program product may be a software installation package.

In a twelfth aspect, an embodiment of the present disclosure provides a computer program which, when being executed, causes a computer to perform some or all of the steps in the methods of the above various aspects.

In a thirteenth aspect, an embodiment of the present disclosure provides a chip including a memory and a processor, and the processor may invoke and run a computer program from the memory to implement some or all of the steps described in the methods of the above various aspects.

In an embodiment of the present disclosure, the network device can forward the first message with the assistance of the first terminal device, that is, the terminal device receiving the first message may assist in forwarding the first message to other terminal devices. The method is beneficial to enhancing the message sent by the network device, and thus is beneficial to expanding the coverage capability of the message sent by the network device.

### BRIEF DESCRIPTION OF THE DRAWINGS

FIG. 1A to FIG. 1C are example diagrams of system architectures of wireless communication systems applicable to an embodiment of the present disclosure.
FIG. 2 is an example diagram of a satellite communication system.
FIG. 3 is an example diagram of an NTN network architecture for transparent payload.
FIG. 4 is an example diagram of an NTN network architecture for regenerative payload.
FIG. 5 is an example diagram of signal occlusion in satellite communications.
FIG. 6 is a schematic flowchart of a wireless communication method according to an embodiment of the present disclosure.
FIG. 7 is an example diagram of a first message according to an embodiment of the present disclosure.
FIG. 8 is an example diagram of a first message according to another embodiment of the present disclosure.
FIG. 9 is an example diagram of a first message according to yet another embodiment of the present disclosure.
FIG. 10 is an example diagram of assisting in forwarding a downlink message according to an embodiment of the present disclosure.
FIG. 11 is a schematic flowchart of a wireless communication method according to another embodiment of the present disclosure.
FIG. 12 is an example diagram of a first message according to yet another embodiment of the present disclosure.
FIG. 13 is an example diagram of a first message according to yet another embodiment of the present disclosure.
FIG. 14 is an example diagram of a possible implementation method indicating a first resource according to an embodiment of the present disclosure.
FIG. 15 is an example diagram of assisting in forwarding uplink and downlink messages according to an embodiment of the present disclosure.
FIG. 16 is a schematic structural diagram of a terminal device according to an embodiment of the present disclosure.
FIG. 17 is a schematic structural diagram of a terminal device according to another embodiment of the present disclosure.
FIG. 18 is a schematic structural diagram of a network device according to an embodiment of the present disclosure.
FIG. 19 is a schematic structural diagram of a communication device according to an embodiment of the present disclosure.

### DETAILED DESCRIPTION

Hereinafter, technical solutions in the present disclosure will be described with reference to the accompanying drawings.

### Communication system architecture

The technical solution of the embodiment of the present disclosure may be applied to various communication systems, such as a global system of mobile communication (GSM) system, a code division multiple access (CDMA) system, and a wideband code division multiple access (WCDMA) system, a general packet radio service (GPRS), a long term evolution (LTE) system, an advanced long term evolution (LTE-A) system, a new radio (NR) system, an evolution of NR system, an LTE-based access to unlicensed spectrum (LTE-U) system, a NR-based access to unlicensed spectrum (NR-U) system, a non-terrestrial network (NTN) system, an universal mobile telecommunication system (UMTS), a wireless local area network (WLAN), a wireless fidelity (WiFi), a 5th-generation (5G) system or other communication systems, such as a future communication system, such as a sixth-generation mobile communication system, a satellite communication system, etc.

Generally speaking, the conventional communication systems support a limited number of connections and are easy to implement. However, with the development of communication technology, the mobile communication system will support not only conventional communication, but also, for example, a device to device (D2D) communication, a machine to machine (M2M) communication, a machine type communication (MTC), a vehicle to vehicle (V2V) communication, or a vehicle to everything (V2X) communication, and the like, and the embodiment of the present disclosure may also be applied to these communication systems.

The communication system in the embodiment of the present disclosure may be applied to a carrier aggregation (CA) scenario, a dual connectivity (DC) scenario, and a standalone (SA) network deployment scenario.

The communication system in the embodiment of the present disclosure may be applied to an unlicensed spectrum, and the unlicensed spectrum may also be regarded as a shared spectrum. Alternatively, the communication system in the embodiment of the present disclosure may also be applied to a licensed spectrum, and the licensed spectrum may also be regarded as a dedicated spectrum.

The embodiments of the present disclosure may be applied to an NTN system or a terrestrial networks (TN) system. As an example and not as a limitation, the NTN system includes a NR-based NTN system and an internet of things (IoT)-based NTN system. For example, in a scenario in which narrow band internet of things (NB-IoT) and enhanced machine type communication (eMTC) access NTN, a system composed of an IoT terminal device and an NTN network may be understood as an IoT-based NTN system.

The embodiments of the present disclosure are described in conjunction with a network device and a terminal device,. The terminal device may also be referred to as a user equipment (UE), an access terminal, a user unit, a user station, a mobile station (MS), a mobile terminal (MT), a remote station, a remote terminal, a mobile device, a user terminal, a terminal, a wireless communication device, a user agent or a user device, and the like.

In an embodiment of the present disclosure, the terminal device may be a STATION (ST) in a WLAN, may be a cellular telephone, a cordless telephone, a session initiation protocol (SIP) telephone, a wireless local loop (WLL) station, a personal digital assistant (PDA) device, a handheld device having a wireless communication function, a computing device or other processing device connected to a wireless modem, a vehicle-mounted device, a wearable device, a terminal device in a next generation communication system such as an NR network, or a terminal device in a future evolved public land mobile network (PLMN) network, etc.

In an embodiment of the present disclosure, the terminal device may be a device that provides voice and/or data connectivity to a user, and may be used to connect people, objects, and machines, for example, a handheld device having a wireless connection function, a vehicle-mounted device, or the like. In an embodiment of the present disclosure, the terminal device may be a mobile phone, a Pad, a notebook computer, a handheld computer, a mobile internet device (MID), a wearable device, a virtual reality (VR) device, an augmented reality (AR) device, a wireless terminal in industrial control, a wireless terminal in self driving, a wireless terminal in remote medical surgery, a wireless terminal in smart grid, a wireless terminal in transportation safety, a wireless terminal in smart city, a wireless terminal in smart home, or the like. Optionally, the terminal device may be used to act as a base station. For example, the terminal device may act as a scheduling entity that provides sidelink signals between the terminal devices in V2X or D2D, etc. For example, cellular telephones and automobiles communicate with each other using sidelink signals. The cellular telephone communicates with the smart home device without relaying the communication signals through a base station.

The network device in the embodiment of the present disclosure may be a device for communicating with a terminal device, and the network device may also be referred to as an access network device or a radio access network device. For example, the network device may be a base station. The network device in the embodiment of the present disclosure may refer to a radio access network (RAN) node (or device) that connects the terminal device to the wireless network. The base station may broadly cover or be replaced with various names such as a NodeB, an evolved NodeB (eNB), a next generation NodeB (gNB), a relay station, an access point, a transmitting and receiving point (TRP), a transmitting point (TP), a master E-UTRA NodeB (MeNB), a secondary E-UTRA NodeB (SeNB), a multi-standard radio(MSR) node, a home base station, a network controller, an access node, a wireless node, an access point (AP), a transmission node, a transceiver node, a base band unit(BBU), a remote radio unit (RRU), an active antenna unit (AAU), a remote radio head (RRH), a central unit (CU), a distributed unit (DU), a positioning node, and the like. The base station may be a macro base station, a micro base station, a relay node, a donor node, or the like, or a combination thereof. The base station may also refer to a communication module, a modem, or a chip for being arranged within the aforementioned devices or apparatus. The base station may also be a mobile switching center, a device that assumes a base station function in D2D, a V2X and a machine-to-machine (M2M) communication, a network-side device in a 6G network, a device that assumes a base station function in a future communication system, or the like. The base stations may support networks of the same or different access technologies. The specific technology and the specific device form adopted by the network device are not limited in the embodiments of the present disclosure.

The base station may be fixed or mobile. For example, a helicopter or drone may be configured to act as a mobile base station, and one or more cells may move based on the location of the mobile base station. In other examples, a helicopter or drone may be configured as a device to communicate with another base station.

In some deployments, the network device in the embodiment of the present disclosure may refer to a CU or a DU, or the network device includes a CU and a DU. The gNB may also include an AAU.

Network devices and terminal devices may be deployed on land, including indoor or outdoor, handheld or vehicle-mounted, they may also be deployed on the water, they may also be deployed on aircraft, balloons and satellites in the air. In the embodiment of the present disclosure, the scenario in which the network device and the terminal device are located is not limited.

As an example and not as a limitation, in embodiments of the present disclosure, the network device may be mobile, for example, the network device may be a mobile device. In some embodiments of the present disclosure, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. In some embodiments of the present disclosure, the network device may also be a base station arranged on land, water, or the like.

In an embodiment of the present disclosure, the network device may provide a service for a cell, and the terminal device communicates with the network device through a transmission resource (for example, the frequency domain resource or the spectrum resource) used by the cell. The cell may be a cell corresponding to the network device (for example, a base station), and the cell may belong to a macro base station or a base station corresponding to a small cell. The small cell may include a metro cell, a micro cell, a pico cell, a femto cell, etc. These small cells have the characteristics of small coverage and low transmission power, and are suitable for providing high-speed data transmission services.

It should be understood that all or part of the functions of the communication device in the present disclosure may also be implemented by software functions running on hardware, or by virtualization functions instantiated on a platform, such as a cloud platform.

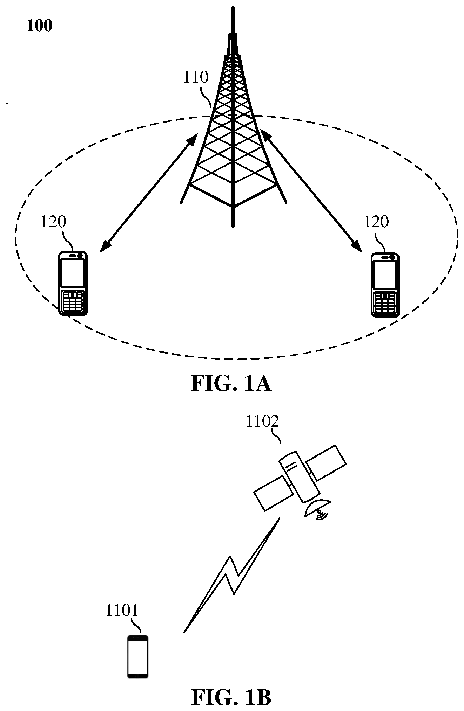

FIG. 1A exemplarily illustrates one network device and two terminal devices. In some embodiments of the present disclosure, the communication system 100 may include a plurality of network devices and the coverage range of each network device may include another number of terminal devices, which is not limited in the embodiments of the present disclosure.

Exemplarily, FIG. 1B is a schematic architecture diagram of another communication system according to an embodiment of the present disclosure. Referring to FIG. 1B, a terminal device 1101 and a satellite 1102 are included, and wireless communication may be performed between the terminal device 1101 and the satellite 1102. The network formed between the terminal device 1101 and the satellite 1102 may also be referred to as an NTN. In the architecture of the communication system illustrated in FIG. 1B, the satellite 1102 may have the function of a base station, and communication may be performed between the terminal device 1101 and the satellite 1102 directly. Under the system architecture, the satellite 1102 may be referred to as a network device. In some embodiments of the present disclosure, the communication system may include a plurality of network devices 1102, and the coverage range of each network device 1102 may include another number of terminal devices, which is not limited in the embodiments of the present disclosure.

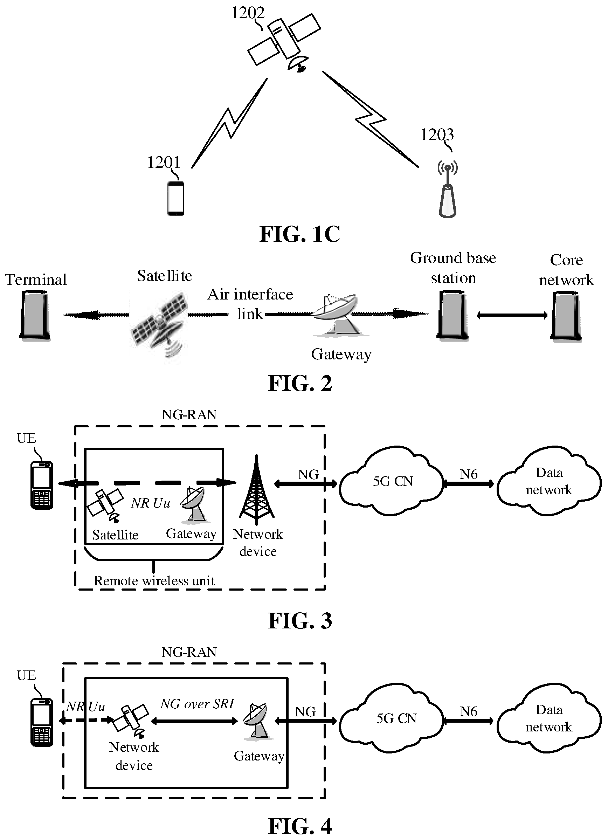

Exemplarily, FIG. 1C is a schematic architecture diagram of another communication system according to an embodiment of the present disclosure. Referring to FIG. 1C, a terminal device 1201, a satellite 1202 and a base station 1203 are included, wireless communication may be performed between the terminal device 1201 and the satellite 1202, and communication may be performed between the satellite 1202 and the base station 1203. The network formed between the terminal device 1201, the satellite 1202, and the base station 1203 may also be referred to as NTN. In the architecture of the communication system illustrated in FIG. 1C, the satellite 1202 may not have the function of a base station, and communication between the terminal device 1201 and the base station 1203 needs to be relayed via the satellite 1202. Under this system architecture, the base station 1203 may be referred to as a network device. In some embodiments of the present disclosure, the communication system may include a plurality of network devices 1203, and the coverage range of each network device 1203 may include another number of terminal devices, which is not limited in the embodiments of the present disclosure.

[**0056]** It should be noted that FIG. 1A to FIG.1C only illustrate systems applicable to the present disclosure in the form of examples, and of course, the method shown in the embodiment of the present disclosure may also be applied to other systems, such as a 5G communication system, an LTE communication system, and the like, which is not specifically limit in the embodiment of the present disclosure.

[**0057]** In some embodiments of the present disclosure, the wireless communication system shown in FIG. 1A to FIG. 1C may further include other network entities such as a mobility management entity (MME), an access and mobility management function (AMF), and the like, which is not limit in the embodiments of the present disclosure.

[**0058]** It should be understood that a device having a communication function in the network/system in the embodiment of the present disclosure may be referred to as a communication device. Taking the communication system 100 illustrated in FIG. 1A as an example, the communication device may include a network device 110 having a communication function and a terminal device 120 having a communication function, and the network device 110 and the terminal device 120 may be specific devices described above, and will not be repeated here. The communication device may also include other devices in the communication system 100, such as other network entities such as a network controller, a mobility management entity, and etc., which are not limited in the embodiments of the present disclosure.

[**0059]** As described above, the technical solution according to the embodiment of the present disclosure may be applied to an NTN system or a TN system. In order to facilitate understanding, some related technical knowledge (for example, NTN network architecture) involved in the embodiments of the present disclosure will be introduced first. As optional solutions, the following related technologies may be arbitrarily combined with the technical solutions of the embodiments of the present disclosure, and all of them belong to the scope of protection of the embodiments of the present disclosure. The embodiments of the present disclosure include at least some of the following.

### NTN

[**0060]** At present, the 3rd generation partnership project (3GPP) is studying NTN technology. The NTN system may generally refer to a satellite communication system, a high altitude platform communication system (such as an aircraft-based communication system, a hot-air-balloon-based communication system, etc.). Among these systems, the satellite communication system is a typical working scenario. In some implementation methods, the NTN generally provides communication services to terrestrial users through the satellite communication. Compared with the terrestrial communication networks (for example, a terrestrial cellular communication), the satellite communication has many unique advantages due to the mobile characteristics of satellites.

[**0061]** First, the satellite communication is not restricted by regions of users. For example, general terrestrial communication networks cannot cover areas such as oceans, mountains, and deserts, etc., where network device cannot be deployed. Alternatively, the terrestrial communication network cannot cover certain areas that are not covered by communication due to sparse population. For the satellite communication, every corner of the earth may be theoretically covered by satellite communication, because one satellite may cover a large area of the ground and the satellite may orbit around the earth.

[**0062]** Second, the satellite communication has great social value. Remote mountainous areas, poor and backward countries or regions, may be covered by the satellite communication at a low cost, , so that people in these areas may enjoy advanced voice communication and mobile Internet technology. From this perspective, the satellite communication is conducive to narrowing the digital divide with developed regions and promoting the development of these regions.

[**0063]** Third, the satellite communication can be performed for a long distance, and the cost of communication does not increase significantly as the communication distance increases. In addition, since the communication distance between the terminal device and the satellite is much larger than that between the terminal device and the ground base station, the satellite communication requires higher transmission power and receiver sensitivity of the terminal device, and at the same time, the satellite also needs to have a larger antenna array and a higher receiver sensitivity.

[**0064]** Then, the stability of satellite communication is high and is not affected by natural disasters.

[**0065]** Finally, the high-speed movement of the satellite causes the cell to move at high speed. In this case, the mobility of the terminal device is relatively small in comparison.

[**0066]** The communication satellites may be divided into LEO satellite, MEO satellite, GEO satellite, HEO satellite, etc., based on different orbital altitudes. At present, the LEO satellite and the GEO satellite are mainly studied.

[**0067]** The altitude of the LEO satellite generally ranges from 500 km to 1500 km. Accordingly, the orbital period of the LEO satellite is about 1.5 hours to 2 hours. For the LEO satellite, the signal propagation delay of single-hop communication between users is generally less than 20 ms. The maximum satellite visible time corresponding to the LEO satellite is about 20 minutes. The LEO satellite has the advantages of short signal propagation distance, less link loss, and low transmission power requirements for terminal device.

[**0068]** The orbital altitude of the GEO satellite is approximately 35786 km. The GEO satellite rotates around the Earth for a period of 24 hours. For the GEO satellite, the signal propagation delay of single-hop communication between users is generally about 250 ms.

[**0069]** In order to ensure satellite coverage and improve the system capacity of the entire satellite communication system, satellites usually use multiple beams to cover the ground area. Therefore, a satellite may form tens to hundreds of beams to cover the ground area. A beam of a satellite may cover a ground area with a diameter of tens to hundreds of kilometers.

[**0070]** Currently, NTN systems may include an NR NTN system and an IoT NTN system.

### NTN Network Architecture

[**0071]** The NTN network architecture may include the following network elements: gateway(s), feeder link(s), service link(s), and satellite(s).

[**0072]** The NTN network architecture may include one or more gateways that may be used to connect satellites and terrestrial public networks. Typically, the gateway may be arranged on the ground.

[**0073]** A feeder link may refer to a link for communication between a gateway and a satellite. In some embodiments, the feeder link may also be referred to as an air interface link.

[**0074]** The serving link may refer to a link for communication between a terminal device and a satellite.

[**0075]** FIG. 2 shows an example diagram of a satellite communication system. As illustrated in FIG. 2, the satellite communication system may include a satellite and one or more gateways. The satellite and the ground base station may establish a feeder link (air interface link) through the gateway, and the satellite may forward the signal of the ground base station to realize the supplementation of areas that the ground base station cannot cover. In the area covered by satellites, terminal device may communicate with corresponding satellites, especially for remote areas, deserts, mountains, oceans and other areas that cannot be covered by the ground base station, the satellite communication system may achieve effective coverage.

[**0076]** In terms of the functions provided by the satellite, the satellite may be divided into a transparent payload satellite and a regenerative payload satellite. The transparent payload satellite means that the satellite only provides the functions of wireless frequency filtering, frequency conversion and amplification. In other words, the transparent payload satellite only provides transparent payload of signals, and will not change the waveform signals it forwards. A regenerative payload satellite means that the satellite may provide one or more of the following functions in addition to the functions of radio frequency filtering, frequency conversion and amplification: demodulation, decoding, routing, conversion, encoding, modulation, etc. The regenerative payload satellite may have some or all of the functions of the base station. Based on different functions provided by satellites in NTN networks, NTN network architectures may be divided into a transparent payload NTN network architecture and a regenerative payload NTN network architecture. FIG. 3 and FIG. 4 respectively show example diagrams of the transparent payload NTN network architecture and the regenerative payload NTN network architecture. In the regenerative payload NTN network architecture, the terminal device and the satellite may communicate through an NR Uu interface, the satellite and the gateway may communicate through a satellite radio interface (SRI), and the SRI interface may be used to send interface messages between the satellite and the core network.

[**0077]** In some embodiments, the NTN network architecture may also include an inter satellite link (ISL). For example, ISL may exist in a regenerative payload NTN network architecture.

[**0078]** In a communication system, a terminal device may be unable to receive a message sent by a network device due to the occlusion or the like, and a message sent by the terminal device may be unable to be received by the network device due to the occlusion. For example, in the TN system, when the terminal device is indoors or is occluded by an object, the terminal device may not be able to receive a message sent by the network device, and the message sent by the terminal device may not be received by the network device. Alternatively, in the NTN system, the communication distance between the terminal device and the satellite is very long, so that the signal transmitted by the terminal device or the satellite is easily occluded, the terminal device may not be able to receive the message sent by the network device, and the message sent by the terminal device may not be received by the network device. In other words, the occlusion and other reasons may cause uplink or downlink coverage vulnerability problems. An example of signal occlusion in satellite communications is given below, taking the NTN system as an example.

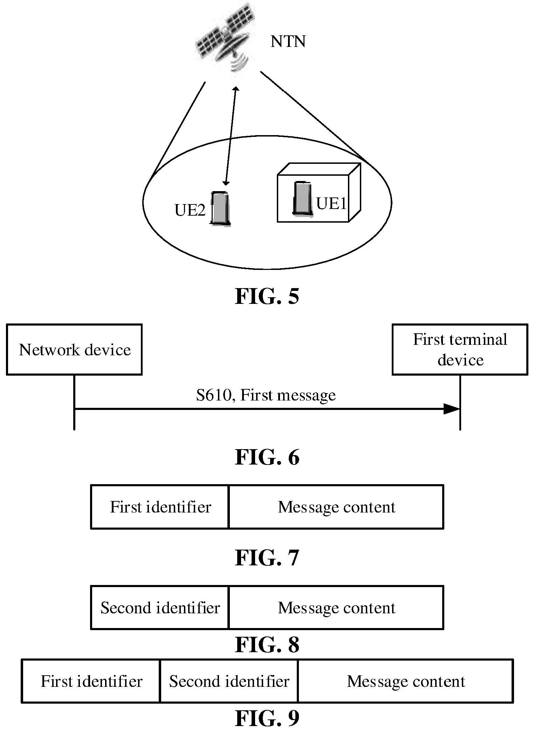

[**0079]** FIG. 5 is an example diagram of signal occlusion in the satellite communication. As illustrated in FIG. 5, when the terminal device 1 is indoors or is occluded by an object, the terminal device 1 may not be able to receive the downlink signal of the satellite, and of course, the uplink transmission of the terminal device 1 may not reach the satellite.

[**0080]** In some implementation methods, since the terminal device is occluded, it may be hard for the terminal device to receive a message from the network device, and the message may include a downlink paging message and/or a broadcast message. In the current mechanism, when the terminal device cannot receive a message (such as a paging message and/or a broadcast message) sent by the network device due to occlusion or the like, it may not take any measures (actions). This practice is usually possible, but in some cases, if the terminal device misses the message sent by the network device, it may lead to serious consequences. For example, the message is an emergency call, a system broadcast message related to public safety and/or a paging message sent by a network device, and serious consequences may occur if the terminal device misses such messages. As an example, in an emergency situation such as an earthquake or a tsunami, a network device usually broadcasts a corresponding public safety message, but in fact, some terminal devices may not be able to receive the public safety message or respond to paging due to reasons such as being indoors, underground, or being occluded by a building.

[**0081]** It should be understood that FIG. 5 illustrates the NTN satellite communication system as an example, but this emergency call and public safety scenario exists not only in the NTN scenario, but also in the TN scenario, while this problem may be more prominent in the NTN scenario.

[**0082]** Therefore, regarding the problem that some terminal devices cannot receive messages (such as a critical system broadcast message, an emergency call message, a public safety message, etc.) sent by the network device due to occlusion or the like, it is necessary to consider how to enhance the messages sent by the network device to expand the coverage capability of messages sent by the network device. In some implementation methods, messages sent by some terminal devices may not be received by the network device due to occlusion or the like. Therefore, it may also be necessary to consider how to enhance the messages sent by the terminal devices to improve communication performance of the communication system.

[**0083]** In view of the above problems, the embodiments of the present disclosure provide a wireless communication method, a terminal device, and a network device, which ensure that the terminal device receiving a message sent by the network device may assist in forwarding the message to other terminal devices, which is beneficial to enhance the message sent by the network device, and thus is beneficial to expand the coverage capability of the message sent by the network device. Hereinafter, the technical solutions of embodiments of the present disclosure will be described with reference to the accompanying drawings.

[**0084]** It should be noted that there may be a variety of application scenarios of the embodiments of the present disclosure, which is not limited in the present disclosure. Exemplarily, the embodiments of the present disclosure may be applied to an NTN system or may be applied to a TN system.

[**0085]** The technical solution of the present disclosure may be executed by interaction between different devices, and the following describes the technical solution by taking the interaction between different devices in the first terminal device, the second terminal device, and the network device as an example. In order to facilitate understanding, the first terminal device, the second terminal device, and the network device will be described below.

[**0086]** The first terminal device and the second terminal device may be, for example, the terminal devices shown in FIG. 1A to FIG. 4, such as a terminal device in an NTN system, a terminal device in a TN system, or the like.

[**0087]** In an embodiment of the present disclosure, the first terminal device is located within a coverage range of the network device, and may normally receive a downlink message sent by the network device. In other words, the message sent by the network device to the first terminal device is not occluded.

[**0088]** In some embodiments, the first terminal device may normally send a message to the network device, or the message sent by the first terminal device to the network device is not occluded.

[**0089]** In some embodiments, the first terminal device is capable of assisting in forwarding messages. For example, the first terminal device may assist in forwarding a downlink message sent by a network device (such as a satellite, a terrestrial base station, etc.) so that the downlink message is forwarded to a second terminal device (e.g., other occluded terminal devices). Alternatively, the first terminal device may assist in forwarding an uplink message sent by the second terminal device (e.g., other occluded terminal devices), so that the uplink message is forwarded to a network device (e.g., a satellite, a ground base station, etc.). Therefore, in some embodiments, the first terminal device may also be understood or referred to as an assisted forwarding terminal device.

[**0090]** In some embodiments, whether the first terminal device may assist in forwarding a message (such as assist in forwarding an uplink message and/or assist in forwarding a downlink message) is indicated by the capability information of the first terminal device. In other words, whether or not the first terminal device is an assisted forwarding terminal device may be indicated by the capability information of the first terminal device.

[**0091]** Exemplarily, the capability information of the first terminal device includes first capability information that may be used to indicate a capability (also referred to as an assisted forwarding capability, a forwarding capability, etc.) related to assisted forwarding of the first terminal device. For example, the first capability information may be used to indicate related information such as a bidirectional forwarding capability and a unidirectional forwarding capability (such as a single downlink forwarding capability and a single uplink forwarding capability) of the first terminal device.

[**0092]** In some embodiments, the first capability information may be used to indicate that the first terminal device supports one of the following capabilities: the first terminal device is capable of assisting in forwarding a downlink message, and the first terminal device is capable of assisting in forwarding an uplink message; the first terminal device is only capable of assisting in forwarding a downlink message; and the first terminal device is only capable of assisting in forwarding an uplink message.

[**0093]** As an example, the first capability information indicates that the first terminal device is capable of assisting in forwarding a downlink message, and the first terminal device is capable of assisting in forwarding an uplink message, and in this case, the first terminal device may assist in forwarding not only the downlink message sent by the network device to the second terminal device (for example, another occluded terminal device), but also the uplink message sent by the second terminal device to the network device.

[**0094]** As another example, the first capability information indicates that the first terminal device is only capable of assisting in forwarding a downlink message, and in this case, the first terminal device may assist in forwarding the downlink message sent by the network device to the second terminal device, but may not assist in forwarding the uplink message sent by the second terminal device to the network device.

[**0095]** As yet another example, the first capability information indicates that the first terminal device is only capable of assisting in forwarding an uplink message, and in this case, the first terminal device may assist in forwarding the uplink message sent by the second device to the network device, but may not assist in forwarding the downlink message sent by the network device to the second network device.

[**0096]** In some embodiments, the first terminal device may be a terminal device close to the second terminal device. In other words, the first terminal device may be a terminal device close to the occluded terminal device.

[**0097]** In some embodiments, the signal (such as the first message mentioned later) sent by the first terminal device may be received by the second terminal device. For example, the first terminal device is close to the second terminal device, and the signal transmitted by the first terminal device may penetrate the obstruction and be received by the second terminal device.

[**0098]** In the embodiment of the present disclosure, the second terminal device may not be able to normally receive the message sent by the network device. For example, the second terminal device may not be able to normally receive a message sent by the network device due to a reason such as being occluded. That is, the message sent by the network device to the second terminal device may be occluded. In some embodiments, the second terminal device is located within the coverage range of the network device, but may not normally receive a message sent by the network device.

[**0099]** In some embodiments, the message sent by the second terminal device may not be received by the network device. For example, a message sent by the second terminal device may not be received by the network device because it is occluded. That is, the message sent by the second terminal device to the network device is occluded. In some embodiments, the second terminal device is located within the coverage range of the network device, but the message sent by the second terminal device cannot be normally received by the network device.

[**00100]** In the embodiment of the present disclosure, the network device may be, for example, the network devices shown in FIG. 1A to FIG. 4, such as a network device in an NTN system (for example a satellite), a network device in a TN system (for example a ground base station), or the like.

[**00101]** Hereinafter, the embodiments of the method of the present disclosure will be described. FIG. 6 is a schematic flowchart of a wireless communication method according to an embodiment of the present disclosure. The method shown in FIG. 6 is described from the perspective of interaction between the first terminal device and the network device. For relevant description about the first terminal device and network device, please refer to the above description. The method shown in FIG. 6 may include step S610, which is described below.

[**00102]** At S610, a first terminal device receives a first message sent by a network device.

[**00103]** The first message is used to instruct terminal device(s) (for example, the first terminal device) receiving the first message to assist the network device in forwarding the first message.

[**00104]** In some embodiments, the network device may send the first message to one or more terminal devices so that after receiving the first message, the one or more terminal devices may assist the network device in forwarding the first message. In some embodiments, the one or more terminal devices may normally receive a message sent by the network device, and/or the network device may normally receive a message sent by the one or more terminal devices. Alternatively, in some embodiments, the one or more terminal devices are terminal devices that are not occluded.

[**00105]** The type of the first message is not specifically limited in the embodiments of the present disclosure. For example, the first message may be a broadcast message, or the first message may be a message for target terminal device(s), or the like. That is, the first message may be a broadcast message for all terminal devices, or may be a message for certain terminal device(s) (a certain terminal device or certain terminal devices).

[**00106]** In some embodiments, the first message may refer to a relatively emergency or relatively important message, or the first message may be a message carrying key information. The key information may be relatively emergency information or relatively important information. In this way, in the embodiment of the present disclosure, the first terminal device may be adopted to forward the first message in time, and it is ensured that the first message is received in time by target terminal device(s) or by all terminal devices within the broadcast range.

[**00107]** In some embodiments, when the first message is a broadcast message, the broadcast message may be, for example, one or more of the following messages: a call message, a public safety message, and a system broadcast message.

[**00108]** In some embodiments, the call message may be, for example, an emergency call message.

[**00109]** In some embodiments, the public safety message may be, for example, a public safety message broadcast by a network device in an emergency situation such as an earthquake or a tsunami.

[**00110]** In some embodiments, the system broadcast message may refer to a system broadcast message that is relatively important or a system broadcast message that carries key information. For example, the system broadcast message may be a system broadcast message related to synchronization, such as a synchronization signal block (SSB) system broadcast message, a physical broadcast channel (PBCH) system broadcast message, and the like.

[00111] In some embodiments, when the first message is a message for the target terminal device(s), the first message may be, for example, a message relatively important to the target terminal device(s), a message containing key information of the target terminal device(s), or the like. For example, when the first message is a message for the target terminal device(s), the first message may be a paging-related message, for example, the first message is a paging message for the target terminal device.

[**00112]** In the embodiment of the present disclosure, the first message sent by the network device may be forwarded by a terminal device (such as the first terminal device) that is not occluded, thereby facilitating the expansion of the downlink coverage capability of the first message.

[**00113]** In some embodiments, after receiving the first message sent by the network device, the first terminal device needs to determine whether the first message is a message that needs it assists in forwarding. Then, how could the first terminal device determine whether the first message is a message that needs it assists in forwarding is a problem that needs to be solved. This is described below.

**[00114]** In some embodiments, the first message may carry relevant identification information, so that the first terminal device may determine whether the first message needs to be forwarded based on the identification information. In other words, in some embodiments, the first message may include (carry) a first identifier used to instruct terminal device(s) receiving the first message to assist the network device in forwarding the first message. In this way, after receiving the first message, the terminal device (such as the first terminal device) may determine whether it is necessary to forward the first message based on whether the first identifier is carried in the first message.

[**00115]** In the embodiment of the present disclosure, the name of the first identifier is not limited, and for example, the first identifier may be referred to as an assisted forwarding identification, a forwarding identification, or the like.

[**00116]** The implementation form of the first identifier is not limited in the embodiment of the present disclosure. In some embodiments, the first identifier may be indication information of 1-bit. When the indication bit is "1", it indicates that the terminal device(s) receiving the first message needs to assist the network device in forwarding the first message. Of course, in some implementation methods, when the indication bit is "0", it indicates that the terminal device(s) receiving the first message needs to assist the network device in forwarding the first message. This is not limited in the embodiment of the present disclosure. In other embodiments, the first identifier may be indication information of multi-bits (2 bits or more than 2 bits). For example, when multi-bits are used to indicate "true" or related information such as assisting in forwarding is needed", it indicates that the terminal device(s) receiving the first message needs to assist the network device in forwarding the first message.

[**00117]** In some embodiments, if the network device requires the terminal device(s) receiving the first message to assist in forwarding the first message, the first identifier may be carried in the first message. If the network device does not require the terminal device(s) receiving the first message to assist in forwarding the first message, the first identifier may not be carried in the first message, or the first identifier may be omitted.

[**00118]** However, the embodiments of the present disclosure are not limited thereto. In some embodiments, the first identifier may be used to indicate whether the terminal device(s) receiving the first message needs to assist the network device in forwarding the first message. For example, when the first identifier uses 1-bit indication information, if the indication bit is "1", it indicates that the terminal device(s) receiving the first message needs to assist the network device in forwarding the first message, and if the indication bit is "0", it indicates that the terminal device(s) receiving the first message does not need to assist the network device in forwarding the first message. Alternatively, when the first identifier adopts multi-bits indication information, if the indication bits are used to indicate "true" or related information such as "assisting in forwarding is needed", it indicates that the terminal device(s) receiving the first message needs to assist the network device in forwarding the first message, and when the indication bits are used to indicate "false" or related information such as "assisting in forwarding is not needed", it indicates that the terminal device(s) receiving the first message does not need to assist the network device in forwarding the first message. In some embodiments, if the network device does not need the terminal device(s) receiving the first message to assist in forwarding the first message, the first identifier may not be carried in the first message, or the first identifier may be omitted.

[**00119]** The position of the first identifier in the first message is not limited in the embodiments of the present disclosure. Exemplarily, the network device may add the first identification to a message header of the first message. An example of the first identifier being located in the message header of the first message may be seen in FIG. 7. However, the embodiments of the present disclosure are not limited thereto. The first identifier may be located in another position of the first message. That is, the first identifier may be located in the header of a message format, or it may be located in another position of a message format.

[**00120]** In some embodiments, if the first message is an emergency message (for example, a public safety message carrying key information such as earthquake or tsunami, an emergency call message, etc.), the first message may carry an identifier for identifying the first message as an emergency message, so that when receiving the first message, the first terminal device can assist the network device in forwarding the first message as far as possible or in time (as soon as possible).

[**00121]** Exemplarily, the first message may include (carry) a second identifier, which may be used to indicate that the first message is an emergency message or an important message (key message). In this way, after receiving the first message, the terminal device (such as the first terminal device) can determine whether it is necessary to forward the first message in time based on whether the first message carries the second identifier.

[**00122]** In the embodiment of the present disclosure, the name of the second identifier is not limited, and for example, the second identifier may be referred to as an emergency message identification, an emergency identification, or the like.

[**00123]** The implementation form of the second identifier is not limited in the embodiment of the present disclosure. In some embodiments, the second identifier may be 1-bit indication information, and when the indication bit is "1", it indicates that the first message is an emergency message. Of course, in some implementation methods, when the indication bit is "0", it indicates that the first message is an emergency message. This is not limited in the embodiments of the present disclosure. In other embodiments, the second identifier may be multi-bits (2 bits or more than 2 bits) indication information, for example, when the multi-bits are used to indicate "true" or to indicate related information such as "emergency message", the first message is an emergency message.

[**00124]** In some embodiments, if the first message is an emergency message, the network device may carry a second identifier in the first message. If the first message is a non-emergency message or the first message is not an emergency message, the network device may not carry the second identifier in the first message, or may omit the second identifier.

[**00125]** However, the embodiments of the present disclosure are not limited thereto. In some embodiments, the second identifier may be used to indicate whether the first message is an emergency message. For example, when the second identifier uses 1-bit indication information, if the indication bit is "1", it indicates that the first message is an emergency message, and if the indication bit is "0", it indicates that the first message is a non-emergency message. Alternatively, when the second identifier uses multi-bits indication information, if the indication bits are used to indicate "true" or related information such as "emergency message", the first message is an emergency message, and if the indication bits are used to indicate "false" or related information such as "non-emergency message", the first message is a non-emergency message. In some embodiments, if the network device considers the first message to be a non-emergency message, the second identifier may not be carried in the first message, or the second identifier may be omitted.

[**00126]** The position of the second identifier in the first message is not limited in the embodiments of the present disclosure. Exemplarily, the network device may add the second identifier to the message header of the first message. An example of the second identifier located in the message header of the first message can be seen in FIG. 8. However, the embodiments of the present disclosure are not limited thereto. The second identifier may be located in another position of the first message. That is, the second identifier may be located in the header of a message format, or it may be located in another position of a message format.

[**00127]** In some embodiments, the first message may carry a first identifier and/or a second identifier. For example, referring to FIG. 9, the first message may carry both the first identifier and the second identifier. In some embodiments, the first message may carry one of the first identifier and the second identifier.

[**00128]** In some embodiments, if the first message is a message that needs the terminal device(s) receiving the first message to promptly assist the network device in forwarding, that is, the first message is an emergency message and needs the terminal device(s) receiving the first message to assist the network device in forwarding, the first identifier may be omitted in the first message and the first message only carries the second identifier. In other words, if the first message is a message that needs the terminal device(s) receiving the first message to promptly assist the network device in forwarding, when the second identifier exists, the first identifier may be omitted and a method of default operation may be adopted. In this case, when the terminal device (such as the first terminal device) receives the first message including the second identifier, the terminal device considers that an assisted forwarding operation is needed for the first message.

[**00129]** In some embodiments, when the network device needs terminal device(s) to assist in forwarding the first message, the network device may not select a specific terminal device for forwarding, but send the first message to all terminal devices, and the first identifier is carried in the first message. In this case, all the terminal devices receiving the first message need to assist the network device in forwarding the first message, resulting in waste of resources.

[**00130]** In some embodiments, when the network device needs terminal device(s) to assist in forwarding the first message, the network device may select specific terminal devices (select some terminal devices) for forwarding, so that resources are saved. As an implementation method, the first message may carry related identifiers for indicating which terminal devices assist the network device in forwarding the first message, so that the terminal devices corresponding to the identifiers assist the network device in forwarding the first message after receiving the first message.

[**00131]** Exemplarily, the first message may carry third identifier(s) The third identifier may be used to indicate terminal device(s) assisting in forwarding the first message. In some cases, if the first message carries the third identifier(s), only the terminal device(s) corresponding to the third identifier(s) needs to assist the network device in forwarding the first message.

[**00132]** In the embodiments of the present disclosure, the name of the third identifier is not limited, and for example, the third identifier may be referred to as an assisted forwarding terminal identification, an identity identification of a forwarding terminal, or the like.

[**00133]** The implementation method of the third identifier is not limited in the embodiments of the present disclosure, as long as the third identifier can uniquely determine the identity of the terminal device. Exemplarily, the third identifier may include an identity identification of the terminal device. That is, the third identifier(s) may include identity identification(s) of the terminal device(s) assisting in forwarding the first message.

[**00134]** The position of the third identifier in the first message is not limited in the embodiments of the present disclosure. Exemplarily, the network device may add third identifier(s) to the message header of the first message. Or the third identifier(s) may be located in another position of the first message.

[**00135]** As described above, the first message may be a broadcast message for all terminal devices or a message for target terminal device(s) (specific terminal device(s)). Then, if the first message is a message for the target terminal device(s), how does the terminal device receiving the first message determine the target terminal device(s) is a problem that needs to be solved.

[**00136]** As one implementation method, the first message may carry identifier(s) for indicating the target terminal device(s) of the first message, so that the terminal device(s) receiving the first message (for example, the first terminal device) may forward the first message to the target terminal device(s) (for example, the second terminal device). Exemplarily, the first message may carry fourth identifier(s). The fourth identifier(s) may be used to indicate target terminal device(s) of the first message. That is, the fourth identifier(s) may be used to indicate which terminal devices the first message needs to be forwarded to.

[**00137]** In the embodiments of the present disclosure, the name of the fourth identifier is not limited. For example, the fourth identifier may be referred to as a target terminal identification, an identity identification of the target terminal, or the like.

[**00138]** The implementation method of the fourth identifier is not limited in the embodiments of the present disclosure, as long as the fourth identifier can uniquely determine the identity of the terminal device. Exemplarily, the fourth identifier may include an identity identification of the terminal device, that is, the fourth identifier may include an identity identification of the target terminal device.

[**00139]** In some embodiments, the fourth identifier(s) may be an identifier of a single terminal device. That is, the first message may be a message for a specific terminal device.

[**00140]** In some embodiments, the fourth identifier(s) are identifiers of a group of terminal devices. That is, the first message may be a message for a group of terminal devices or for certain specific terminal devices.

[**00141]** The position of the fourth identifier in the first message is not limited in the embodiments of the present disclosure. Exemplarily, the network device may add fourth identifier(s) to the message header of the first message, or the fourth identifier(s) may be located in another position of the first message.

[**00142]** In some embodiments, the first message may carry one or more of the identifiers (the first identifier, the second identifier, the third identifier, and the fourth identifier) described above, which is not limited in the embodiments of the present disclosure. For example, the first message may carry the first identifier, the second identifier, and the third identifier. For another example, the first message may carry the second identifier and the third identifier. For another example, the first message may carry the second identifier, the third identifier, the fourth identifier, and etc.

[**00143]** In some embodiments, the identifiers described above are carried in the first message. However, the embodiments of the present disclosure are not limited thereto. In some embodiments, one or more of the identifiers described above may be carried in other messages or other signaling. For example, one or more of the above identifiers may be carried in a radio resource control (RRC) message, a medium access control control element (MAC CE) signaling, or a downlink control information (DCI).

[**00144]** In some embodiments, after receiving the first message, the terminal device(s) (such as the first terminal device) that receives the first message may send a forwarding message of the first message to the target terminal device(s) (such as the second terminal device), or after receiving the first message, the terminal device(s) that receives the first message may forward the first message to the target terminal device(s). However, the embodiments of the present disclosure are not limited thereto. In some embodiments, the terminal device(s) that receives the first message may itself select whether to send a forwarding message of the first message to the target terminal device(s). For example, even if the first identifier and/or the second identifier are carried in the first message, the terminal device(s) receiving the first message may select not to send the forwarding message of the first message to the target terminal device(s).

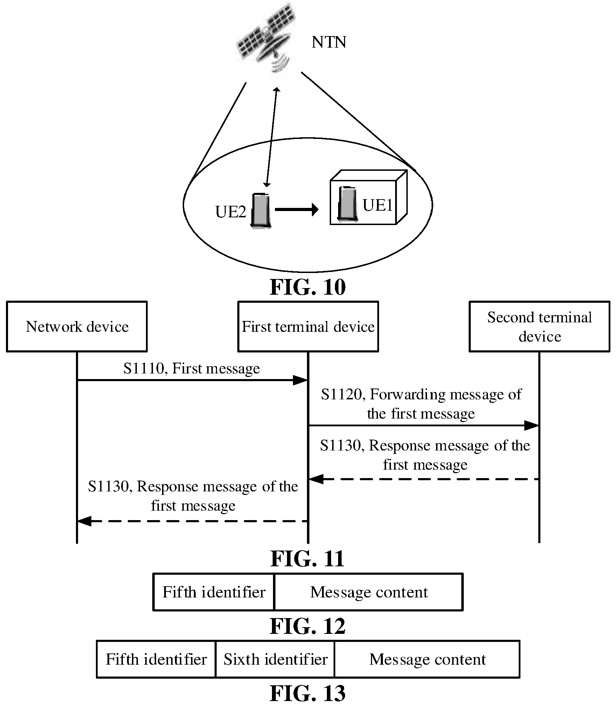

[**00145]** Hereinafter, with reference to FIG. 10 and FIG. 11, how does the first terminal device send a forwarding message of the first message to the second terminal device after receiving the first message will be described.

[**00146]** FIG. 10 is an example diagram of downlink assisted forwarding based on a first terminal device. As illustrated in FIG. 10, the first terminal device receives a first message from a network device (an NTN satellite shown in FIG. 10), and forwards the first message under certain conditions so that the second terminal device can receive the first message.

[**00147]** FIG. 11 is a schematic flowchart of a wireless communication method according to another embodiment of the present disclosure. The method illustrated in FIG. 11 is introduced from the perspective of interaction between the first terminal device, the second terminal device, and the network device. The method illustrated in FIG. 11 includes step S1110 and step S1120.

[**00148]** At S1110, a first terminal device receives a first message sent by a network device.

[**00149]** For detailed description of step S1110, please refer to the foregoing description of step S610, and will not be repeatedly described here for the sake of brevity.

[**00150]** For detailed description of the first message, please refer to the foregoing description, such as the type of the first message, the identification information included in the first message, and the like, and will not be repeatedly described here for the sake of brevity.

[**00151]** At S1120, the first terminal device sends a forwarding message of the first message to a second terminal device.

[**00152]** In some embodiments, the first terminal device may send a forwarding message of the first message to one or more target terminal devices (such as the second terminal device). For example, when the first message is a broadcast message for all terminal devices, the first terminal device may send the forwarding message to a plurality of target terminal devices. For another example, when the first message is a message for the specific terminal device(s), the first terminal device may send the forwarding message to the specific terminal device(s) (a single terminal device or a group of terminal devices).

[**00153]** In some embodiments, the forwarding message of the first message may be the same as the first message.

[**00154]** In some embodiments, the forwarding message of the first message may be a message obtained after the first terminal device processes the first message, that is, after receiving the first message, the first terminal device may process the first message to obtain the forwarding message of the first message, and then send the forwarding message of the first message to the target terminal device (such as the second terminal device). The embodiments of the present disclosure does not limit the manner in which the first terminal device processes the first message to obtain the forwarding message of the first message, for example, the first terminal device may process the message header of the first message and not process the message content (message body) of the first message.

[**00155]** It should be understood that if the forwarding message of the first message sent by the first terminal device does not carry any identification information, the target terminal device (such as the second terminal device) receiving the forwarding message may not know that now there is an occlusion problem between the target terminal device receiving the forwarding message and the network device, or the target terminal device receiving the forwarding message may not know that it cannot normally receive the message sent by the network device and/or that the network device cannot normally receive the message sent by the target terminal device.

[**00156]** In view of the above problem, in order to let the target terminal device receiving the forwarding message know that it currently has an occlusion problem, or to let the target terminal device receiving the forwarding message know that it is currently unable to directly communicate with the network device, as an implementation method, the first terminal device may carry the fifth identifier when sending the forwarding message of the first message. The fifth identifier may be used to indicate that a type of the message is a forwarding message. That is, the fifth identifier may be used to indicate that the forwarding message of the first message is the forwarding message, so that the target terminal device receiving the forwarding message knows that the forwarding message is a message the terminal device assists the network device in forwarding, and thus knows that it may not be able to directly communicate with the network device at present.

[**00157]** The implementation method of the fifth identifier is not limited in the embodiments of the present disclosure. In some embodiments, the fifth identifier may reuse the content indicated by the first identifier, that is, the content of the fifth identifier may be the same as the content of the first identifier. As an implementation method, when the first terminal device sends a forwarding message of the first message, the first terminal device may forward the first identifier carried in the first message together. In some embodiments, the fifth identifier may be other indication information used to indicate that a type of a message is a forwarding message.

[**00158]** The position of the fifth identifier in the forwarding message of the first message is not limited in the embodiments of the present disclosure. Exemplarily, the fifth identifier may be located in a message header of the forwarding message. An example of the fifth identifier being located in the message header of the forwarding message can be seen in FIG. 12. However, the embodiments of the present disclosure are not limited thereto. The fifth identifier may be located in another position of the forwarding message. That is, the fifth identifier may be located in the head of a message format, or it may be located in another position of a message format.

**[00159]** In some embodiments, the forwarding message of the first message may carry a sixth identifier, and the sixth identifier may be used to indicate a terminal device transmitting the forwarding message, so that the target terminal device receiving the forwarding message knows which terminal device assisted in the forwarding the received forwarding message.

[**00160]** In the embodiments of the present disclosure, the name of the sixth identifier is not limited, and for example, the sixth identifier may be referred to as a forwarding terminal identifier, a terminal identifier for assisting forwarding, or the like.

[**00161]** The implementation method of the sixth identifier is not limited in the embodiments of the present disclosure, as long as the sixth identifier can uniquely determine the identity of the terminal device. Exemplarily, the sixth identifier may include an identity identifier of the terminal device, i.e., the sixth identifier may include an identity identifier of the terminal device transmitting the forwarding message of the first message.

[**00162]** In the embodiments of the present disclosure, the position of the sixth identifier in the forwarding message of the first message is not limited. Exemplarily, the sixth identifier may be located in the message header of the forwarding message, or the sixth identifier may be located in another position of the forwarding message.

[**00163]** In some embodiments, the forwarding message of the first message may carry one or more of the fifth identifier and the sixth identifier. For example, the forwarding message may carry both the fifth identifier and the sixth identifier, and FIG. 13 shows an example of the forwarding message carrying both the fifth identifier and the sixth identifier. For another example, the forwarding message may carry the fifth identifier without carrying the sixth identifier, or the like.

[**00164]** In some embodiments, when the first terminal device sends the forwarding message of the first message, it is necessary to determine on which resources the forwarding message is sent. Hereinafter, the bearer resource of the forwarding message of the first message will be described.

[**00165]** In some embodiments, the forwarding message of the first message may be carried on the first resource. The first resource may be a resource determined based on the predefined information or a resource determined based on the indication information.

[**00166]** In some embodiments, the first resource may be a resource determined based on predefined information. In some embodiments, the predefined information may be associated with one or more types of information, for example, the predefined information may be associated with a reception time of the first message, and/or the predefined information may be associated with a data packet size of the first message, etc. In some embodiments, the first resource is a resource determined based on the predefined information, which may be understood that the first resource is determined based on the predefined information associated with the reception time of the first message.

[**00167]** In some embodiments, the first resource may be a resource determined based on the reception time of the first message.

[**00168]** In some embodiments, the first resource may be determined based on one or more of the following: a first uplink time unit after reception of the first message by first terminal device; a first downlink time unit after reception of the first message by first terminal device; a time unit in which a first system broadcast message after reception of the first message by first terminal device is located; a time unit in which a first downlink control channel (or a physical downlink control channel (PDCCH)) after reception of the first message by first terminal device is located; and a time unit in which the first terminal device receives the first message.

[**00169]** The time unit is not specifically limited in the embodiments of the present disclosure., For example, the time unit may be any one of time units such as a frame, a subframe, a timeslot, and a symbol; or the time unit may be a time unit or the like in a future communication system. Taking the time unit being a timeslot as an example, the first resource may be determined based on one or more of the following: a first uplink timeslot or a downlink timeslot after reception of the first message by first terminal device, a timeslot in which a first system broadcast message after reception of the first message by first terminal device is located, a timeslot in which a first PDCCH after reception of the first message by first terminal device is located, a timeslot in which the first terminal device receives the first message, and the like.

[**00170]** In some embodiments, the first terminal device determines the first resource based on the time unit of receiving the first message, which may be understood that the first terminal device sends a forwarding message of the first message immediately after receiving the first message. That is, the time unit in which the first terminal device receives the first message may refer to the time unit when the first terminal device completes the reception of the first message.

[**00171]** The first terminal device sends the forwarding message immediately after receiving the first message, or sends the forwarding message in the first relevant time unit (such as the first uplink time unit, the first downlink time unit, the time unit in which the first system broadcast message is located, the time unit in which the first PDCCH is located, etc.) after receiving the first message, so that it is ensured that the forwarding message can be forwarded in time (as soon as possible). However, the embodiments of the present disclosure are not limited thereto. In some embodiments, the first terminal device may send the forwarding message at an interval upon receiving the first message. For example, the first resource may be determined based on the second time unit, third time unit, or further uplink time units (or downlink time units) after reception of the first message by first terminal device. Alternatively, the first resource may be determined based on a time unit in which the second system broadcast message, third system broadcast message, or further system broadcast messages after reception of the first message by first terminal device are located. Alternatively, the first resource may be determined based on a time unit in which the second PDCCH, third PDCCH, or further PDCCHs after reception of the first message by first terminal device are located, and so on.

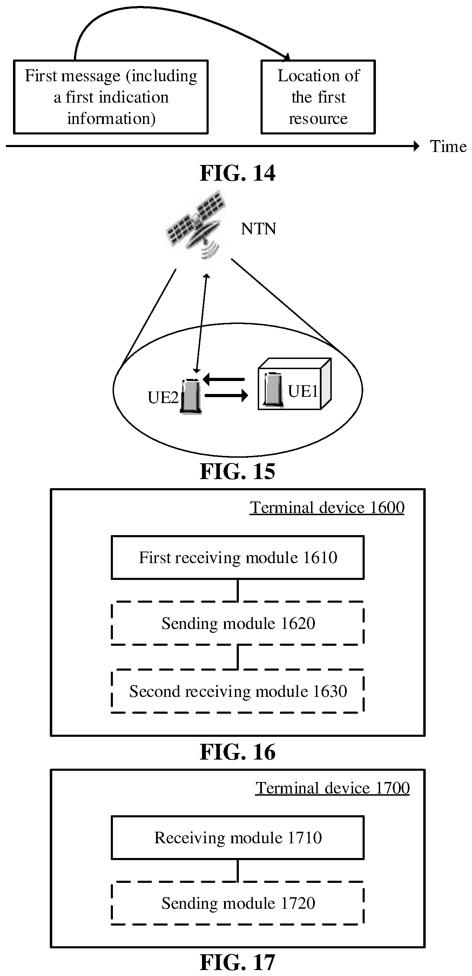

[**00172]** In some embodiments, the first resource may be determined based on the first indication information. As an implementation method, the first resource may be determined based on a first indication information carried in the first message, or the first message may include the first indication information for indicating a first resource. An example of determining the first resource based on the first indication information included in the first message may be referred to FIG. 14. As another implementation method, the first resource may be determined based on the first indication information carried in the message carrying one or more of the first identifier, the second identifier, the third identifier, and the fourth identifier. In other words, the message carrying one or more of the first identifier, the second identifier, the third identifier, and the fourth identifier may include the first indication information for indicating the first resource.

[**00173]** In some embodiments, the first resource may be a periodic resource. In other words, the first terminal device may use the periodic resource as the first resource to send the forwarding message of the first message. For example, the first terminal device may determine a periodic resource as the first resource based on predefined information. Alternatively, the first terminal device may determine the periodic resource as the first resource based on the reception time of the first message. Alternatively, the first terminal device may determine the periodic resource as the first resource based on the first indication information (such as the first indication information included in the first message).

[**00174]** Hereinafter, combined with two application scenarios, an exemplary introduction is provided regarding the process that the first terminal device, after receiving the first message, assists the network device in sending the forwarding message of the first message to the second terminal device.

### Application Scenario 1: The first message is a broadcast message.

[**00175]** In this application scenario, the first message may be, for example, a broadcast message for all terminal devices, for example, a broadcast message for all terminal devices within the coverage range of the network device. In this application scenario, after receiving the first message, the first terminal device may send a forwarding message of the first message on the first resource.

[**00176]** In some embodiments, the first message may carry a first identifier and/or a second identifier.

[**00177]** In some embodiments, the first resource is determined based on the predefined information/reception time of the first message, or based on the first indication information.

[**00178]** In some embodiments, the first terminal device may be a terminal device close to the second terminal device. Therefore, the signal sent by the first terminal device may penetrate the obstruction and be received by the second terminal device.

**[00179]** In some embodiments, the first terminal device may also choose not to send a forwarding message of the first message after receiving the first message, or the first terminal device may choose not to forward the first message after receiving the first message.

### Application Scenario 2: The first message is a message for the target terminal device.

[**00180]** In this application scenario, for example, the first message may be a message for one or more specific terminal devices, for example, the first message may be a paging message for a single terminal device or a group of terminal devices. The network device may forward the first message with the assistance of the first terminal device to expand downlink coverage.

[**00181]** Unlike application scenario 1, in application scenario 2, it is necessary to have clear target terminal device(s), that is, the first message needs to carry the identity information of the target terminal device(s), for example, the identifier(s) of the target terminal device(s). That is, in the application scenario 2, the fourth identifier(s) may be carried in the first message. Taking the first message being the paging message as an example, specific paging target(s) is needed in application scenario 2, and the identity identifier(s) of the paging target(s) may be carried in the first message.

[**00182]** In this application scenario, after receiving the first message, the first terminal device may send a forwarding message of the first message on the first resource.

[**00183]** In some embodiments, the first resource may be determined based on the predefined information/reception time of the first message. For example, the first terminal device may send the forwarding message of the first message in a timeslot in which the first PDCCH after receiving the first message is located. Alternatively, the first terminal device may send a forwarding message of the first message immediately after receiving the first message.

[**00184]** In some embodiments, the first resource may be determined based on the first indication information.

**[00185]** In some embodiments, the first terminal device may choose not to send a forwarding message of the first message after receiving the first message, or the first terminal device may choose not to forward the first message after receiving the first message.

[**00186]** In some embodiments, the target terminal device(s) (such as the second terminal device) needs to respond to the network device, or needs to send out a message responding to the network device. In this case, the target terminal device(s) may also need to use the assistance of other terminal devices for forwarding, and how the target terminal device(s) responds to the network device with the assistance of other terminal devices will be described below.

[**00187]** In some embodiments, the target terminal device(s) may send a response message of the first message through the terminal device which assists in forwarding the first message. For example, if the first message is sent to the second terminal device by the network device with the assistance of the first terminal device in forwarding, the second terminal device may send the response message of the first message to the network device through the forwarding of the first terminal device.

[**00188]** As an implementation method, when the terminal device (such as the first terminal device) that assists in forwarding the first message supports the bidirectional forwarding capability, the target terminal device(s) may use the terminal device that assists in forwarding the first message to forward the response message of the first message to the network device. FIG. 15 illustrates an example that, the network device utilizes the first terminal device to assist in forwarding the first message, and the second terminal device utilizes the first terminal device to assist in forwarding the response message of the first message.

[**00189]** Referring again to FIG. 11, in some embodiments, the method shown in FIG. 11 may further include S1130, in which a second terminal device sends a response message of the first message to the first terminal device, so that the first terminal device assists the second terminal device in forwarding the response message to the network device. In some embodiments, at S1130, the first terminal device may further forward the response message of the first message to the network device.

[**00190]** However, the embodiments of the present disclosure are not limited thereto. In some embodiments, the target terminal device(s) may send the response message of the first message through the forwarding of other terminal device(s) other than the terminal device(s) that assists in forwarding the first message. In other words, the terminal device for uplink forwarding is not specified in the embodiments of the present disclosure. The terminal device(s) for uplink forwarding may be other terminal device(s) other than the terminal device for assisting in forwarding the first message. For example, the first message is sent to the second terminal device by the network device with the assistance of the first terminal device in forwarding, and the second terminal device may send the response message of the first message to the network device through the forwarding of another terminal device other than the first terminal device.

[**00191]** As an implementation method, when the terminal device(s) (such as the first terminal device) that assists in forwarding the first message only supports assisting in forwarding the downlink message, the target terminal device may use other terminal device(s) other than the terminal device that assists in forwarding the first message to forward the response message of the first message.

[**00192]** In some embodiments, the response message of the first message may include one or more types of information. Exemplarily, the response message of the first message may include one or more of the following information: first request information, and a seventh identifier.

[**00193]** The first request information may be used to request terminal device(s) receiving the response message to forward the response message to the network device.

[**00194]** The seventh identifier may be used to indicate terminal device(s) forwarding the response message of the first message. In some embodiments, the seventh identifier may reuse the content of the sixth identifier, that is, the seventh identifier and the sixth identifier may be the same. For example, when the terminal device that forwards the response message of the first message and the terminal device that transmits the forwarding message of the first message are the same terminal device, the seventh identifier and the sixth identifier are the same. In some embodiments, the seventh identifier and the sixth identifier may be different. For example, when the terminal device that forwards the response message of the first message and the terminal device that transmits the forwarding message of the first message are different terminal devices, the seventh identifier and the sixth identifier are different.

[**00195]** As an example, when the target terminal device(s) sends the response message of the first message through the forwarding of the terminal device(s) that assists in forwarding the first message, the response message of the first message may carry a seventh identifier for indicating the terminal device(s) that assists in forwarding the first message. In some embodiments, when the target terminal device(s) sends the response message of the first message through the forwarding of the terminal device(s) that assists in forwarding the first message, the response message of the first message may carry the first request information in addition to the seventh identifier.

[**00196]** As another example, when the target terminal device(s) sends the response message of the first message through forwarding of other terminal device(s) other than the terminal device(s) that assists in forwarding the first message, the response message of the first message may carry the first request information. For example, the response message of the first message may carry the first request information without carrying the seventh identifier. Of course, in this case, the response message of the first message may carry the first request information and the seventh identifier, but the seventh identifier is used to indicate terminal device(s) that forwards the response message to the network device, and this terminal device(s) is different from the terminal device(s) that assists in forwarding the first message.

[**00197]** Hereinafter, the embodiments of the method of the present disclosure are described in detail with reference to FIG. 1 to FIG. 15, and the embodiments of the device of the present disclosure are described in detail with reference to FIG. 16 to FIG. 19. It should be understood that the description of the method embodiment and the description of the device embodiment correspond to each other, and therefore, the portions not described in detail can be referred to the foregoing method embodiments.

[**00198]** FIG. 16 is a schematic structural diagram of a terminal device according to an embodiment of the present disclosure. The terminal device may be the first terminal device described in any of the foregoing. The terminal device 1600 illustrated in FIG. 16 may include a first receiving module 1610.

[**00199]** The first receiving module 1610 may be configured to receive a first message sent by a network device, wherein the first message instructs terminal device(s) receiving the first message to assist the network device in forwarding the first message.

[00200] Optionally, the first message includes one or more of the following: a first identifier used to instruct terminal device(s) receiving the first message to assist the network device in forwarding the first message; a second identifier used to indicate that the first message is an emergency message; third identifier(s) used to indicate terminal device(s) assisting in forwarding the first message; and fourth identifier(s) used to indicate target terminal device(s) of the first message.

[00201] Optionally, the fourth identifier(s) is an identifier of a single terminal device; or the fourth identifier(s) are identifiers of a group of terminal devices.

[00202] Optionally, the terminal device 1600 further includes a sending module 1620 configured to send a forwarding message of the first message to a second terminal device.

[00203] Optionally, the forwarding message is carried on a first resource, the first resource is determined based on one or more of the following: predefined information; and a reception time of the first message.

[00204] Optionally, the first resource is determined based on one or more of the following: a first uplink time unit after reception of the first message by first terminal device; a first downlink time unit after reception of the first message by first terminal device; a time unit in which a first system broadcast message after reception of the first message by first terminal device is located; a time unit in which a first downlink control channel after reception of the first message by first terminal device is located; and a time unit in which the first terminal device receives the first message.

[**00205]** Optionally, the first message includes first indication information for indicating a first resource, and the first resource is used to transmit the forwarding message.

[**00206]** Optionally, the first resource is a periodic resource.

[**00207]** Optionally, the forwarding message includes one or more of the following information: a fifth identifier used to indicate that a type of a message is a forwarding message; and a sixth identifier used to indicate a terminal device transmitting the forwarding message.

[**00208]** Optionally, the terminal device further includes a second receiving module 1630 configured to receive a response message of the first message sent by the second terminal device.

[**00209]** Optionally, the response message includes one or more of the following information: first request information used to request a terminal device receiving the response message to forward the response message to the network device; and a seventh identifier used to indicate a terminal device forwarding the response message to the network device.

[**00210]** Optionally, capability information of the first terminal device comprises first capability information indicating that the first terminal device supports one of following capabilities: the first terminal device is capable of assisting in forwarding a downlink message, and the first terminal device is capable of assisting in forwarding an uplink message; the first terminal device is only capable of assisting in forwarding a downlink message; and the first terminal device is only capable of assisting in forwarding an uplink message.

[**00211]** Optionally, the first message is a broadcast message or a message for target terminal device(s).

[**00212]** Optionally, the broadcast message is a call message, a public safety message, or a system broadcast message.

[**00213]** Optionally, the first terminal device is a terminal device in a non-terrestrial mobile communication system.

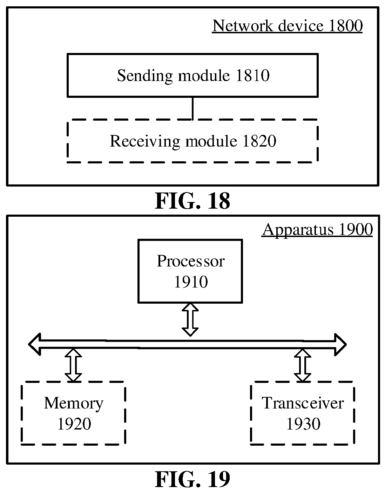

[**00214]** Optionally, the first receiving module 1610 may be a transceiver 1930. The terminal device 1600 may further include a processor 1910 and a memory 1920, as specifically shown in FIG. 19.

[**00215]** FIG. 17 is a schematic structural diagram of a terminal device according to another embodiment of the present disclosure. The terminal device illustrated in FIG. 17 may be the second terminal device described in any of the foregoing. The terminal device 1700 illustrated in FIG. 17 may include a receiving module 1710.

[**00216]** The receiving module 1710 may be configured to receive, from a first terminal device, a forwarding message of a first message sent by a network device, wherein the first message instructs terminal device(s) receiving the first message to assist the network device in forwarding the first message.

[**00217]** Optionally, the first message includes one or more of the following: a first identifier used to instruct terminal device(s) receiving the first message to assist the network device in forwarding the first message; a second identifier used to indicate that the first message is an emergency message; third identifier(s) used to indicate terminal device(s) assisting in forwarding the first message; and fourth identifier(s) used to indicate target terminal device(s) of the first message.

[**00218]** Optionally, the fourth identifier(s) is an identifier of a single terminal device; or the fourth identifier(s) are identifiers of a group of terminal devices.

[**00219]** Optionally, the forwarding message is carried on a first resource, the first resource is determined based on one or more of the following: predefined information; and a reception time of the first message.

[**00220]** Optionally, the first resource is determined based on one or more of the following: a first uplink time unit after reception of the first message by first terminal device; a first downlink time unit after reception of the first message by first terminal device; a time unit in which a first system broadcast message after reception of the first message by first terminal device is located; a time unit in which a first downlink control channel after reception of the first message by first terminal device is located; and a time unit in which the first terminal device receives the first message.

[**00221]** Optionally, the first message includes first indication information for indicating a first resource, and the first resource is used to transmit the forwarding message.

[**00222]** Optionally, the first resource is a periodic resource.

[**00223]** Optionally, the forwarding message includes one or more of the following information: a fifth identifier used to indicate that a type of a message is a forwarding message; and a sixth identifier used to indicate a terminal device transmitting the forwarding message.

[**00224]** Optionally, the terminal device 1700 further includes a sending module 1720 configured to send a response message of the first message to the first terminal device.

[**00225]** Optionally, the response message includes one or more of the following information: first request information used to request a terminal device receiving the response message to forward the response message to the network device; and a seventh identifier used to indicate a terminal device forwarding the response message to the network device.

[**00226]** Optionally, the first message is a broadcast message or a message for target terminal device(s).

[**00227]** Optionally, the broadcast message is a call message, a public safety message, or a system broadcast message.

[**00228]** Optionally, the second terminal device is a terminal device in a non-terrestrial mobile communication system.

[**00229]** Optionally, the receiving module 1710 may be a transceiver 1930. The terminal device 1700 may further include a processor 1910 and a memory 1920, as specifically shown in FIG. 19.

[**00230]** FIG. 18 is a schematic structural diagram of a network device according to an embodiment of the present disclosure; and the network device 1800 shown in FIG. 18 may include a sending module 1810.

[**00231]** The sending module 1810 may be configured to send a first message, wherein the first message instructs terminal device(s) receiving the first message to assist the network device in forwarding the first message.

[**00232]** Optionally, the first message includes one or more of the following: a first identifier used to instruct terminal device(s) receiving the first message to assist the network device in forwarding the first message; a second identifier used to indicate that the first message is an emergency message; third identifier(s) used to indicate terminal device(s) assisting in forwarding the first message; and fourth identifier(s) used to indicate target terminal device(s) of the first message.

[**00233]** Optionally, the fourth identifier(s) is an identifier of a single terminal device; or the fourth identifier(s) are identifiers of a group of terminal devices.

[**00234]** Optionally, a forwarding message of the first message is carried on a first resource, the first resource is determined based on one or more of the following: predefined information; and a reception time of the first message.

[**00235]** Optionally, the first resource is determined based on one or more of the following: a first uplink time unit after reception of the first message by a terminal device; a first downlink time unit after reception of the first message by a terminal device; a time unit in which a first system broadcast message after reception of the first message by a terminal device is located; a time unit in which a first downlink control channel after reception of the first message by a terminal device is located; and a time unit in which a terminal device receives the first message.

[**00236]** Optionally, the first message includes first indication information for indicating a first resource, and the first resource is used to transmit the forwarding message of the first message.

[**00237]** Optionally, the first resource is a periodic resource.

[**00238]** Optionally, the forwarding message includes one or more of the following information: a fifth identifier used to indicate that a type of a message is a forwarding message; and a sixth identifier used to indicate a terminal device transmitting the forwarding message.

[**00239]** Optionally, the network device 1800 further includes a receiving module 1820 configured to receive a response message of the first message forwarded by a first terminal device.

[**00240]** Optionally, the response message includes one or more of the following information: first request information used to request a terminal device receiving the response message to forward the response message to the network device; and a seventh identifier used to indicate a terminal device forwarding the response message to the network device.

[**00241]** Optionally, the first message is a broadcast message or a message for target terminal device(s).

[**00242]** Optionally, the broadcast message is a call message, a public safety message, or a system broadcast message.

[**00243]** Optionally, the network device is a network device in a non-terrestrial mobile communication system.

**[00244]** Optionally, the sending module 1810 may be a transceiver 1930. The network device 1800 may also include a processor 1910 and a memory 1920, as specifically shown in FIG. 19.

[**00245]** FIG. 19 is a schematic structural diagram of a communication device according to an embodiment of the present disclosure. The dashed line in FIG. 19 indicates that the unit or module is optional. The apparatus 1900 may be used to implement the methods described in the method embodiments described above. The apparatus 1900 may be a chip, a terminal device, or a network device.

[**00246]** The apparatus 1900 may include one or more processors 1910. The processor 1910 may support the apparatus 1900 to implement the methods described in the previous method embodiments. The processor 1910 may be a general-purpose processor or a special-purpose processor. For example, the processor may be a central processing unit (CPU). Alternatively, the processor may also be other general purpose processor, a digital signal processor (DSP), an application specific integrated circuit (ASIC), a field programmable gate array (FPGA) or other programmable logic device, a discrete gate or a transistor logic device, a discrete hardware component, or the like. The general purpose processor may be a microprocessor or the processor may be any conventional processor or the like.

[**00247]** The apparatus 1900 may also include one or more memories 1920. The memory 1920 has stored a program that may be invoked by the processor 1910 to cause the processor 1910 to perform the method described in the embodiments described above. The memory 1920 may be independent of the processor 1910 or may be integrated in the processor 1910.

[**00248]** The apparatus 1900 may also include a transceiver 1930. The processor 1910 may communicate with other devices or chips through the transceiver 1930. For example, the processor 1910 may send and receive data with other devices or chips through the transceiver 1930.

[**00249]** The embodiment of the present disclosure also provides a computer-readable storage medium for storing a program. The computer-readable storage medium may be applied to a terminal device or a network device provided by an embodiment of the present disclosure, and the program causes a computer to perform a method executed by the terminal device or the network device in each embodiment of the present disclosure.

[**00250]** The embodiments of the present disclosure also provide a computer program product. The computer program product includes a program. The computer program product may be applied to a terminal device or a network device provided by an embodiment of the present disclosure, and the program causes a computer to perform a method executed by the terminal device or the network device in each embodiment of the present disclosure.

[**00251]** The embodiments of the present disclosure also provide a computer program. The computer program may be applied to a terminal device or a network device provided by an embodiment of the present disclosure, and the computer program causes a computer to perform a method executed by the terminal device or the network device in each embodiment of the present disclosure.

[**00252]** It is to be understood that the terms "system" and "network" may be used interchangeably in this application. In addition, the terminology used in the present disclosure is for explanation of specific embodiments of the present disclosure only, and is not intended to limit the present disclosure. The terms "first", "second", "third", and "fourth", etc. in the specification, claims and the accompanying drawings of the present disclosure are used to distinguish different objects, and are not used to describe a specific order. Furthermore, the terms "comprising" and "having" and any variations thereof are intended to cover non-exclusive inclusions.

[**00253]** In the embodiments of the present disclosure, the "indication" mentioned may be a direct indication, an indirect indication, or an associated relationship. For example, A indicates B may mean that A directly indicates B, for example, B may be acquired by A. A indicates B may also mean that A indicates B indirectly, for example A indicates C, and B may be acquired through C. A indicates B may also mean that there is an association relationship between A and B.

[**00254]** In an embodiment of the present disclosure, "B corresponds to A" means that B is associated with A, and B may be determined from A. However, it should also be understood that B is determined from A does not mean that B is determined from A alone, and that B may also be determined from A and/or other information.

[**00255]** In the embodiments of the present disclosure, the term "correspond" may indicate that there is a direct correspondence or indirect correspondence relationship between the two objects, may indicate that there is a correlation relationship between the two objects, or may indicate a relationship between indicating and being instructed, configuring and being configured, or the like.

[**00256]** In the embodiments of the present disclosure, the "include" may refer to directly including or indirectly including. Optionally, the "include" in the embodiments of the present disclosure may be replaced with "indicate" or "being used to determine". For example, A includes B, may be replaced with A indicates B, or A is used to determine B.

[**00257]** In the embodiment of the present disclosure, "predefined" or "preconfigured" may be implemented by storing a corresponding code, a table, or other methods for indicating relevant information in a device (including, for example, a terminal device and a network device) in advance, and the specific implementation method is not limited in the present disclosure. For example, predefined may refer to defined in the protocol.

[**00258]** In the embodiment of the present disclosure, the "protocol" may refer to a standard protocol in the communication field, and may include, for example, an LTE protocol, an NR protocol, and related protocols applied to future communication systems, which is not limited in the present disclosure.

[**00259]** The term "and/or" in the embodiment of the present disclosure is only an association relationship describing association objects, and indicates that there may be three relationships. For example, A and/or B may mean that A alone exists, A and B simultaneously exist, and B alone exists. In addition, the character "/" herein generally indicates that the associated objects before and after "/" are in an "or" relationship.

[**00260]** In various embodiments of the present disclosure, the size of the sequence number of the processes described above does not mean the order of execution, and the order of execution of each process should be determined by its function and internal logic, and should not constitute any limitation on the implementation process of the embodiments of the present disclosure.

[**00261]** In several embodiments provided by the present disclosure, it should be understood that the disclosed systems, devices, and methods may be implemented in other ways. For example, the device embodiments described above are merely schematic, for example, the division of units is only one logical function division, and there may be other division methods in actual implementation, for example, multiple units or components may be combined or integrated into another system, or some features may be ignored or not implemented. In addition, the coupling or direct coupling or communication connection between each other illustrated or discussed may be an indirect coupling or communication connection through some interface, device or unit, which may be electrical, mechanical or otherwise.

[**00262]** The units described as separate components may or may not be physically separate, and the components displayed as units may or may not be physical units, that is, they may be located in one place or may be distributed over a plurality of network units. Some or all of the units may be selected based on actual needs to achieve the purpose of the solution of the present embodiment.

[**00263]** In addition, the functional units in the various embodiments of the present disclosure may be integrated into one processing unit, or may exist as separate physical units. Two or more units may be integrated into one unit.

[**00264]** The embodiments described above may be implemented in whole or in part by the software, hardware, firmware, or any combination thereof. When implemented using the software, the embodiments may be implemented in whole or in part in the form of a computer program product. The computer program product includes one or more computer instructions. When the computer program instructions are loaded and executed on a computer, the processes or functions described in accordance with embodiments of the present disclosure are generated in whole or in part. The computer may be a general purpose computer, a special purpose computer, a computer network, or other programmable device. The computer instructions may be stored in a computer-readable storage medium or transmitted from one computer-readable storage medium to another computer-readable storage medium, for example, the computer instructions may be transmitted from one website site, computer, server or data center by wired (e.g. coaxial cable, optical fiber, digital subscriber line (DSL)) or wireless (e.g. infrared, wireless, microwave, etc.) means to another website site, computer, server or data center. The computer-readable storage medium may be any available medium that may be read by a computer or a data storage device such as a server, a data center, or the like that incorporates one or more available media integrations. The available media may be a magnetic media (e.g., a floppy disk, a hard disk, a magnetic tape), an optical media (e.g., a digital video disc (DVD)), or a semiconductor media (e.g., a solid state disk (SSD)), etc.

[**00265]** The foregoing is merely a specific embodiment of the present disclosure, but the scope of protection of the present disclosure is not limited thereto, and changes or substitutions easily conceived by any person skilled in the art within the technical scope disclosed in the present disclosure should be fall within the scope of protection of the present disclosure. Therefore, the scope of protection of the present disclosure should be based on the scope of protection of the claims.

## Claims

1. A wireless communication method, comprising:
receiving, by a first terminal device, a first message sent by a network device, wherein the first message instructs terminal device(s) receiving the first message to assist the network device in forwarding the first message.

2. The method of claim 1, wherein the first message comprises one or more of the following:
a first identifier used to instruct terminal device(s) receiving the first message to assist the network device in forwarding the first message;
a second identifier used to indicate that the first message is an emergency message;
third identifier(s) used to indicate terminal device(s) assisting in forwarding the first message; and
fourth identifier(s) used to indicate target terminal device(s) of the first message.

3. The method of claim 2, wherein the fourth identifier(s) is an identifier of a single terminal device; or the fourth identifier(s) are identifiers of a group of terminal devices.

4. The method of any one of claims 1 to 3, further comprising:
sending, by the first terminal device, a forwarding message of the first message to a second terminal device.

5. The method of claim 4, wherein the forwarding message is carried on a first resource, the first resource is determined based on one or more of the following:
predefined information; and
a reception time of the first message.

6. The method of claim 5, wherein the first resource is determined based on one or more of the following:
a first uplink time unit after reception of the first message by first terminal device;
a first downlink time unit after reception of the first message by first terminal device;
a time unit in which a first system broadcast message after reception of the first message by first terminal device is located;
a time unit in which a first downlink control channel after reception of the first message by first terminal device is located; and
a time unit in which the first terminal device receives the first message.

7. The method of claim 4, wherein the first message comprises first indication information for indicating a first resource, and the first resource is used to transmit the forwarding message.

8. The method of any one of claims 5 to 7, wherein the first resource is a periodic resource.

9. The method of any one of claims 4 to 8, wherein the forwarding message comprises one or more of the following information:
a fifth identifier used to indicate that a type of a message is a forwarding message; and
a sixth identifier used to indicate a terminal device transmitting the forwarding message.

10. The method of any one of claims 4 to 9, further comprising:
receiving, by the first terminal device, a response message of the first message sent by the second terminal device.

11. The method of claim 10, wherein the response message comprises one or more of the following information:
first request information used to request a terminal device receiving the response message to forward the response message to the network device; and
a seventh identifier used to indicate a terminal device forwarding the response message to the network device.

12. The method of any of claims 1 to 3, wherein capability information of the first terminal device comprises first capability information indicating that the first terminal device supports one of following capabilities:
the first terminal device is capable of assisting in forwarding a downlink message, and the first terminal device is capable of assisting in forwarding an uplink message;
the first terminal device is only capable of assisting in forwarding a downlink message; and
the first terminal device is only capable of assisting in forwarding an uplink message.

13. The method of any one of claims 1 to 12, wherein the first message is a broadcast message or a message for target terminal device(s).

14. The method of claim 13, wherein the broadcast message is a call message, a public safety message, or a system broadcast message.

15. The method of any one of claims 1 to 14, wherein the first terminal device is a terminal device in a non-terrestrial mobile communication system.

16. A wireless communication method, comprising:
receiving, by a second terminal device from a first terminal device, a forwarding message of a first message sent by a network device, wherein the first message instructs terminal device(s) receiving the first message to assist the network device in forwarding the first message.

17. The method of claim 16, wherein the first message comprises one or more of the following:
a first identifier used to instruct terminal device(s) receiving the first message to assist the network device in forwarding the first message;
a second identifier used to indicate that the first message is an emergency message;
third identifier(s) used to indicate terminal device(s) assisting in forwarding the first message; and
fourth identifier(s) used to indicate target terminal device(s) of the first message.

18. The method of claim 17, wherein the fourth identifier(s) is an identifier of a single terminal device; or the fourth identifier(s) are identifiers of a group of terminal devices.

19. The method of any one of claims 16 to 18, wherein the forwarding message is carried on a first resource, the first resource is determined based on one or more of the following:
predefined information; and
a reception time of the first message.

20. The method of claim 19, wherein the first resource is determined based on one or more of the following:
a first uplink time unit after reception of the first message by first terminal device;
a first downlink time unit after reception of the first message by first terminal device;
a time unit in which a first system broadcast message after reception of the first message by first terminal device is located;
a time unit in which a first downlink control channel after reception of the first message by first terminal device is located; and
a time unit in which the first terminal device receives the first message.

21. The method of any one of claims 16 to 18, wherein the first message comprises first indication information for indicating a first resource, and the first resource is used to transmit the forwarding message.

22. The method of any one of claims 19 to 21, wherein the first resource is a periodic resource.

23. The method of any one of claims 16 to 22, wherein the forwarding message comprises one or more of the following information:
a fifth identifier used to indicate that a type of a message is a forwarding message; and
a sixth identifier used to indicate a terminal device transmitting the forwarding message.

24. The method of any one of claims 16 to 23, further comprising:
sending, by the second terminal device, a response message of the first message to the first terminal device.

25. The method of claim 24, wherein the response message comprises one or more of the following information:
first request information used to request a terminal device receiving the response message to forward the response message to the network device; and
a seventh identifier used to indicate a terminal device forwarding the response message to the network device.

26. The method of any one of claims 16 to 25, wherein the first message is a broadcast message or a message for target terminal device(s).

27. The method of claim 26, wherein the broadcast message is a call message, a public safety message, or a system broadcast message.

28. The method of any one of claims 16 to 27, wherein the second terminal device is a terminal device in a non-terrestrial mobile communication system.

29. A wireless communication method, comprising:
sending, by a network device, a first message, wherein the first message instructs terminal device(s) receiving the first message to assist the network device in forwarding the first message.

30. The method of claim 29, wherein the first message comprises one or more of the following:
a first identifier used to instruct terminal device(s) receiving the first message to assist the network device in forwarding the first message;
a second identifier used to indicate that the first message is an emergency message;
third identifier(s) used to indicate terminal device(s) assisting in forwarding the first message; and
fourth identifier(s) used to indicate target terminal device(s) of the first message.

31. The method of claim 30, wherein the fourth identifier(s) is an identifier of a single terminal device; or the fourth identifier(s) are identifiers of a group of terminal devices.

32. The method of any one of claims 29 to 31, wherein a forward message of the first message is carried on a first resource, the first resource is determined based on one or more of the following:
predefined information; and
a reception time of the first message.

33. The method of claim 32, wherein the first resource is determined based on one or more of the following:
a first uplink time unit after reception of the first message by a terminal device;
a first downlink time unit after reception of the first message by a terminal device;
a time unit in which a first system broadcast message after reception of the first message by a terminal device is located;
a time unit in which a first downlink control channel after reception of the first message by a terminal device is located; and
a time unit in which a terminal device receives the first message.

34. The method of any one of claims 29 to 31, wherein the first message comprises first indication information for indicating a first resource, and the first resource is used to transmit the forwarding message of the first message.

35. The method of any one of claims 32 to 34, wherein the first resource is a periodic resource.

36. The method of any one of claims 32 to 35, wherein the forwarding message comprises one or more of the following information:
a fifth identifier used to indicate that a type of a message is a forwarding message; and
a sixth identifier used to indicate a terminal device transmitting the forwarding message.

37. The method of any one of claims 29 to 36, further comprising:
receiving, by the network device, a response message of the first message forwarded by a first terminal device.

38. The method of claim 37, wherein the response message comprises one or more of the following information:
first request information used to request a terminal device receiving the response message to forward the response message to the network device; and
a seventh identifier used to indicate a terminal device forwarding the response message to the network device.

39. The method of any one of claims 29 to 38, wherein the first message is a broadcast message or a message for target terminal device(s).

40. The method of claim 39, wherein the broadcast message is a call message, a public safety message, or a system broadcast message.

41. The method of any one of claims 29 to 40, wherein the network device is a network device in a non-terrestrial mobile communication system.

42. A terminal device, wherein the terminal device is a first terminal device, the terminal device comprises:
a first receiving module, configured to receive a first message sent by a network device, wherein the first message instructs terminal device(s) receiving the first message to assist the network device in forwarding the first message.

43. The terminal device of claim 42, wherein the first message comprises one or more of the following:
a first identifier used to instruct terminal device(s) receiving the first message to assist the network device in forwarding the first message;
a second identifier used to indicate that the first message is an emergency message;
third identifier(s) used to indicate terminal device(s) assisting in forwarding the first message; and
fourth identifier(s) used to indicate target terminal device(s) of the first message.

44. The terminal device of claim 43, wherein the fourth identifier(s) is an identifier of a single terminal device; or the fourth identifier(s) are identifiers of a group of terminal devices.

45. The terminal device of any one of claims 42 to 44, further comprising:
a sending module, configured to send a forwarding message of the first message to a second terminal device.

46. The terminal device of claim 45, wherein the forwarding message is carried on a first resource, the first resource is determined based on one or more of the following:
predefined information; and
a reception time of the first message.

47. The terminal device of claim 46, wherein the first resource is determined based on one or more of the following:
a first uplink time unit after reception of the first message by first terminal device;
a first downlink time unit after reception of the first message by first terminal device;
a time unit in which a first system broadcast message after reception of the first message by first terminal device is located;
a time unit in which a first downlink control channel after reception of the first message by first terminal device is located; and
a time unit in which the first terminal device receives the first message.

48. The terminal device of claim 45, wherein the first message comprises first indication information for indicating a first resource, and the first resource is used to transmit the forwarding message.

49. The terminal device of any one of claims 46 to 48, wherein the first resource is a periodic resource.

50. The terminal device of any one of claims 45 to 49, wherein the forwarding message comprises one or more of the following information:
a fifth identifier used to indicate that a type of a message is a forwarding message; and
a sixth identifier used to indicate a terminal device transmitting the forwarding message.

51. The terminal device of any one of claims 45 to 50, further comprising:
a second receiving module, configured to receive a response message of the first message sent by the second terminal device.

52. The terminal device of claim 51, wherein the response message comprises one or more of the following information:
first request information used to request a terminal device receiving the response message to forward the response message to the network device; and
a seventh identifier used to indicate a terminal device forwarding the response message to the network device.

53. The terminal device of any of claims 42 to 44, wherein capability information of the first terminal device comprises first capability information indicating that the first terminal device supports one of following capabilities:
the first terminal device is capable of assisting in forwarding a downlink message, and the first terminal device is capable of assisting in forwarding an uplink message;
the first terminal device is only capable of assisting in forwarding a downlink message; and
the first terminal device is only capable of assisting in forwarding an uplink message.

54. The terminal device of any one of claims 42 to 53, wherein the first message is a broadcast message or a message for target terminal device(s).

55. The terminal device of claim 54, wherein the broadcast message is a call message, a public safety message, or a system broadcast message.

56. The terminal device of any one of claims 42 to 55, wherein the first terminal device is a terminal device in a non-terrestrial mobile communication system.

57. A terminal device, wherein the terminal device is a second terminal device, the terminal device comprises:
a receiving module, configured to receive, from a first terminal device, a forwarding message of a first message sent by a network device, wherein the first message instructs terminal device(s) receiving the first message to assist the network device in forwarding the first message.

58. The terminal device of claim 57, wherein the first message comprises one or more of the following:
a first identifier used to instruct terminal device(s) receiving the first message to assist the network device in forwarding the first message;
a second identifier used to indicate that the first message is an emergency message;
third identifier(s) used to indicate terminal device(s) assisting in forwarding the first message; and
fourth identifier(s) used to indicate target terminal device(s) of the first message.

59. The terminal device of claim 58, wherein the fourth identifier(s) is an identifier of a single terminal device; or the fourth identifier(s) are identifiers of a group of terminal devices.

60. The terminal device of any one of claims 57 to 59, wherein the forwarding message is carried on a first resource, the first resource is determined based on one or more of the following:
predefined information; and
a reception time of the first message.

61. The terminal device of claim 60, wherein the first resource is determined based on one or more of the following:
a first uplink time unit after reception of the first message by first terminal device;
a first downlink time unit after reception of the first message by first terminal device;
a time unit in which a first system broadcast message after reception of the first message by first terminal device is located;
a time unit in which a first downlink control channel after reception of the first message by first terminal device is located; and
a time unit in which the first terminal device receives the first message.

62. The terminal device of any one of claims 57 to 59, wherein the first message comprises first indication information for indicating a first resource, and the first resource is used to transmit the forwarding message.

63. The terminal device of any one of claims 60 to 62, wherein the first resource is a periodic resource.

64. The terminal device of any one of claims 57 to 63, wherein the forwarding message comprises one or more of the following information:
a fifth identifier used to indicate that a type of a message is a forwarding message; and
a sixth identifier used to indicate a terminal device transmitting the forwarding message.

65. The terminal device of any one of claims 57 to 64, further comprising:
a sending module, configured to send a response message of the first message to the first terminal device.

66. The terminal device of claim 65, wherein the response message comprises one or more of the following information:
first request information used to request a terminal device receiving the response message to forward the response message to the network device; and
a seventh identifier used to indicate a terminal device forwarding the response message to the network device.

67. The terminal device of any one of claims 57 to 66, wherein the first message is a broadcast message or a message for target terminal device(s).

68. The terminal device of claim 67, wherein the broadcast message is a call message, a public safety message, or a system broadcast message.

69. The terminal device of any one of claims 57 to 68, wherein the second terminal device is a terminal device in a non-terrestrial mobile communication system.

70. A network device, comprising:
a sending module, configured to send a first message, wherein the first message instructs terminal device(s) receiving the first message to assist the network device in forwarding the first message.

71. The network device of claim 70, wherein the first message comprises one or more of the following:
a first identifier used to instruct terminal device(s) receiving the first message to assist the network device in forwarding the first message;
a second identifier used to indicate that the first message is an emergency message;
third identifier(s) used to indicate terminal device(s) assisting in forwarding the first message; and
fourth identifier(s) used to indicate target terminal device(s) of the first message.

72. The network device of claim 71, wherein the fourth identifier(s) is an identifier of a single terminal device; or the fourth identifier(s) are identifiers of a group of terminal devices.

73. The network device of any one of claims 70 to 72, wherein a forward message of the first message is carried on a first resource, the first resource is determined based on one or more of the following:
predefined information; and
a reception time of the first message.

74. The network device of claim 73, wherein the first resource is determined based on one or more of the following:
a first uplink time unit after reception of the first message by a terminal device;
a first downlink time unit after reception of the first message by a terminal device;
a time unit in which a first system broadcast message after reception of the first message by a terminal device is located;
a time unit in which a first downlink control channel after reception of the first message by a terminal device is located; and
a time unit in which a terminal device receives the first message.

75. The network device of any one of claims 70 to 72, wherein the first message comprises first indication information for indicating a first resource, and the first resource is used to transmit the forwarding message of the first message.

76. The network device of any one of claims 73 to 75, wherein the first resource is a periodic resource.

77. The network device of any one of claims 73 to 76, wherein the forwarding message comprises one or more of the following information:
a fifth identifier used to indicate that a type of a message is a forwarding message; and
a sixth identifier used to indicate a terminal device transmitting the forwarding message.

78. The network device of any one of claims 70 to 77, further comprising:
a receiving module, configured to receive a response message of the first message forwarded by a first terminal device.

79. The network device of claim 78, wherein the response message comprises one or more of the following information:
first request information used to request a terminal device receiving the response message to forward the response message to the network device; and
a seventh identifier used to indicate a terminal device forwarding the response message to the network device.

80. The network device of any one of claims 70 to 79, wherein the first message is a broadcast message or a message for target terminal device(s).

81. The network device of claim 80, wherein the broadcast message is a call message, a public safety message, or a system broadcast message.

82. The network device of any one of claims 70 to 81, wherein the network device is a network device in a non-terrestrial mobile communication system.

83. A terminal device comprising a processor and a memory for storing a program, wherein the processor is configured for invoking the program stored in the memory, to cause the terminal device to perform the method of any one of claims 1 to 15, or the method of any one of claims 16 to 28.

84. A network device comprising a processor and a memory for storing a program, wherein the processor is configured for invoking the program stored in the memory, to cause the network device to perform the method of any one of claims 29 to 41.

85. An apparatus comprising a processor for invoking a program from a memory to cause the apparatus to perform the method of any one of claims 1 to 41.

86. A chip comprising a processor for invoking a program from a memory to cause a device on which the chip is mounted to perform the method of any one of claims 1 to 41.

87. A computer-readable storage medium for storing a program that causes a computer to perform the method of any one of claims 1 to 41.

88. A computer program product comprising a program that causes a computer to perform the method of any one of claims 1 to 41.

89. A computer program that causes a computer to perform the method of any one of claims 1 to 41.
